# EUROPEAN PATENT APPLICATION

(11) **EP 4 620 299 A1**
(43) Date of publication of application: **24.09.2025**
(21) Application number: 25164556.0
(22) Date of filing: 18.03.2025
(51) Int. Cl.: A01K 63/04

(54) **ECOLOGICAL FILTER COMPOSED OF OVERLAYED FILTERING MASSES FOR AQUARIUMS AND AQUATERRARIUMS**

(30) Priority: 21.03.2024 PT 2024012294
(71) Applicant: AQUATLANTIS - PRODUTOS PARA ANIMAIS DOMÉSTICOS, S.A., 4815-694 Guimarães (PT)
(72) Inventor: PEREIRA, DAVID MIRANDA, Guimarães (PT)
(74) Representative: Monteiro Alves, Inês

(57) **Abstract**

An ecological filter for aquariums and aquaterrariums comprising a set of filtering masses disposed in vertical overlay: the first filtering mass (1), the second filtering mass (2), the third filtering mass (3) and the fourth filtering mass (4) each packaged in a pouch of non-woven textile material ((1-a), (2-a), (3-a) and (4-a)).

The four filtering masses perform distinct functions, from purification and clarification of the water to the prevention of algae and combat of bacteria, not resorting to fossil-origin products and using environmentally sustainable substances, the present invention constitutes a gain in terms of environmental preservation, ease of maintenance and cost reduction.

## Description

### TECHNICAL FIELD

Aquatlantis is an important producer of aquariums and respective accessories.

The invention is the result of developing new filtering solutions, providing high-performance filtering masses for the inside of household aquariums, intended both for beginners and professional aquarium enthusiasts.

The invention presents a prominent eco-design component, anchored in the use of biomaterials, replacing fossil-origin plastics used in this type of filtration system.

Understanding the urgency and the need to transition to more sustainable practices, the applicant of the present invention encountered the perfect opportunity to invest in a project in the ambit of eco-design of filtration systems, comprising the use of biomaterials, which contribute to the environmental sustainability of said products throughout their life cycle.

In parallel to the environmental concern and high performance level, the invention contributes other requirements, namely the functionality, quality, safety, low cost and production facility.

The filtering masses of the invention present a set of significantly valuable assets:
- They are specific for the size and capacity of the filter, in recharge, and especially designed for ease of use and high filtering capacity (absorption/adsorption/retention of pollutants);
- They increase filtering efficiency;
- They are flexible in terms of position and easy to maintain, without disturbing the integrity of the ecosystem of the aquarium, reducing the knowledge requirements of the user;
- They are endowed with a set of materials comprised of sponges, pumice stone, resins, aluminum and carbon, to obtain the same types of filtration, but in a significantly more efficient manner, with the least possible human intervention and in a more ecological way.

### STATE OF THE ART

Filtering systems for aquariums existing today on the market are characterized by using plastic material of fossil origin in terms of filtering system boxes. The same applies to recharges/consumables which, at the end of their useful life, become elements that are detrimental to the planet.

Moreover, existing filtration systems present a lower filtering efficiency, and preserving the physical-chemical quality of the water inside the aquarium is guaranteed to a reduced extent, and determines the need for maintenance which, on average, may occur with greater frequency.

Today, mechanical and chemical filtering requires that the water in the aquarium be changed every month. In turn, biological filtering requires that the water be replaced around every 6 months.

The proposed invention offers a more sustainable solution during the course of its life cycle, using material of biological origin as an alternative to the conventional plastic to house the filtering masses.

With a high performance in terms of filtration, regarding the preservation of the physical-chemical quality of the water inside the aquarium (temperature, alkalinity and chemical/mineral composition), the invention guarantees a significant decrease in scum and residues in the aquarium, significantly reducing the need to change the water in the aquarium constantly.

The change of fossil-origin material for biological material in terms of consumables means the disposal thereof does not adversely affect the environment as currently occurs (recharges injected into virgin polystyrene).

The invention will enable the applicant of the invention to be the first company in its sector to produce more ecological water-filtering systems in aquariums and aquaterrariums, bring benefits for the environment, competitiveness and innovation.

### DESCRIPTION OF THE DRAWING

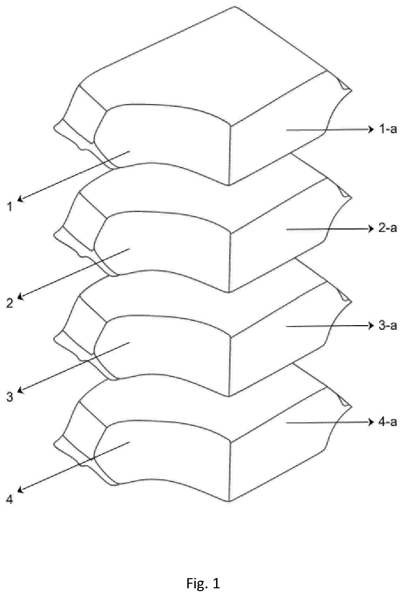

Figure 1 represents the invention, showing the four filtering masses disposed in vertical overlay: the first filtering mass (1), the second filtering mass (2), the third filtering mass (3) and the fourth filtering mass (4) packaged, each one and respectively, in an outer pouch of non-woven textile material of the first filtering mass (1-a), in an outer pouch of non-woven textile material of the second filtering mass (2-a), in an outer pouch of non-woven textile material of the third filtering mass (3-a) and in an outer pouch of non-woven textile material of the fourth filtering mass (4-a).

### DESCRIPTION OF THE BEST EMBODIMENT OF THE INVENTION

The filter that is the object of the invention constitutes a set of filtering masses, organized in a pile (in vertical overlay).

In the best embodiment, the invention is characterized by the overlay of four filtering masses.

Merely as an example, but not limitative on the order of placement, the invention is endowed with:
- A first anti-algae filtering mass (1), comprised of activated aluminum, zeolite/green stone, white resin and brown resin wrapped in an outer pouch of non-woven textile material of the first filtering mass (1-a).

Said components in the first filtering mass (1) present the following characteristics with effects in the invention:
The zeolite/green stone is a natural zeolite-based environmental conditioner. Developed especially for use in aquiculture as an adsorbent of ammonia, mechanical filtering means and also as a substrate for bacteria colonization in biological filters. It is highly selective for ammoniacal azote, which is highly toxic for aquatic organisms. Additionally, it possesses high filtering power, managing to remove very small particles (5µm) whereby assisting in achieving more crystalline water;

The white resin is an ionic exchange resin, of the macro porous type, especially designed to remove nitrates from water, nitrites and residual chlorine that can be harmful to fish and other aquatic organisms. Said macro-porous structure of the resin enables high adsorption capacity and efficiency in the ionic exchange. The resin is stable in a wide range of pH (4.5-8.5) and temperature (up to 100°C), which makes it suitable for diverse aquarium water conditions;

The brown resin is a mixed-bed resin, comprising a mixture of cationic and anionic resins. It offers various functions and properties that can benefit the aquarium environment. It is highly effective in removing ions dissolved in the water, such as nitrates and phosphates. It also possesses a high capacity for ionic exchange, which makes it efficient in removing contaminants and impurities from the water. It is stable in a wide range of pH and temperature, making it suitable for diverse aquarium water conditions.
- A second filtering mass (2), having bacterial action, containing pumice stone and clay, wrapped in an outer pouch of non-woven textile material of the second filtering mass (2-a);
- A third filtering mass (3) for cleaning the water, containing activated aluminum, pure resin and clay, wrapped in an outer pouch of non-woven textile material of the third filtering mass (3-a);
- A fourth filtering mass (4) for purifying the water, containing activated aluminum (option for treating aquarium waters, being effective in removing contaminants such as fluor and arsenic, besides which may reduce the cloudiness of the water), zeolite/green stone, doped zeolite (product made from chemically-modified zeolite, removes heavy metals, enables the treated water to be re-used, it has high selectivity for heavy metals which are found in low concentrations, does not leach the metals removed and retains fine particles) and activated carbon, wrapped in an outer pouch of non-woven textile material of the fourth filtering mass (4-a).

## Claims

1. Ecological filter composed of overlayed filtering masses for aquariums and aquaterrariums, **characterized by**,
a) a first filtering mass (1) comprising activated aluminum, zeolite/green stone, a white resin and a brown resin, wherein the first filtering mass (1) is wrapped in an outer pouch of non-woven textile material of the first filtering mass (1-a); wherein the zeolite/green stone is an environmental conditioner, made from natural zeolite;
wherein the white resin is an ionic exchange resin of the macro-porous type;
wherein the brown resin is a resin comprising a mixture of cationic and anionic resins; and
b) a second filtering mass (2) comprising pumice stone and clay, wherein the second filtering mass (2) is wrapped in an outer pouch of non-woven textile material of the second filtering mass (2-a); and
c) a third filtering mass (3) comprising activated aluminum, a pure resin and clay, wherein the third filtering mass (3) is wrapped in an outer pouch of non-woven textile material of the third filtering mass (3-a); and
d) a fourth filtering mass (4) comprising activated aluminum, zeolite/green stone, doped zeolite and activated carbon, wherein the fourth filtering mass (4) is wrapped in an outer pouch of non-woven textile material of the fourth filtering mass (4-a);
wherein the doped zeolite is a product made from chemically-modified zeolite.
